# EUROPÄISCHE PATENTSCHRIFT

(11) **EP 0 546 323 B1**
(45) Veröffentlichungstag und Bekanntmachung des Hinweises auf die Patenterteilung: **08.01.1997**
(21) Anmeldenummer: 92119000.5
(22) Anmeldetag: 06.11.1992
(51) Int. Cl.: G01S 17/87, G01S 17/02

(54) **Reflexionslichttaster**
Light sensor switch using reflection
Commutateur photosensible à réflexion

(30) Priorität: 10.12.1991 DE 4140614
(43) Veröffentlichungstag der Anmeldung: 16.06.1993
(73) Patentinhaber: Leuze electronic GmbH + Co., D-73277 Owen (DE)
(72) Erfinder: Bauder, Frank, Dipl.-Ing., W-7444 Beuren (DE); Manner, Joachim, CH-7310 Bad Ragaz (CH)

(56) Entgegenhaltungen:
- WO-A-89/11710
- DE-A- 3 627 972
- PATENT ABSTRACTS OF JAPAN vol. 014, no. 011 (P-988)11. Januar 1990 & JP-A--12 59 313 (NIKON) 17 Oktober 1989

## Beschreibung

Die Erfindung bezieht sich auf einen Reflexionslichttaster gemäß dem Oberbegriff des Anspruchs 1.

Ein derartiger Lichttaster ist durch die am 24.06.1992 veröffentlichte europäische Patentanmeldung EP 0 491 118 A3 bekannt.

Der Erfindung liegt die Aufgabe zugrunde, einen Lichttaster dieser Art dahingehend zu vervollkommnen, daß die Tastweite elektrisch programmierbar und der jeweilige Objektabstand vom Reflexionslichttaster zur Anzeige bringbar ist.

Diese Angabe ist erfindungsgemäß durch die kennzeichnenden Merkmale des Anspruchs 1 gelöst.

Weiterbildungen und zweckmäßige Ausgestaltungen der Erfindung sind in den Unteransprüchen angegeben.

Die Erfindung wird im nachstehenden anhand der Zeichnung erläutert.

Es zeigen:
- Fig. 1: Prinzipskizze des Lichttasters mit den Zentralstrahlen zweier Sendelichtbündel, den Zentrahlstrahl des Empfangslichtbündels und ein in der Abtastzone befindliches Objekt in zwei unterschiedlichen Positionen auf der Z-Achse,
- Fig. 2: ein Blockschaltbild des elektrischen Teils des Reflexionslichttasters mit der erfindungsgemäßen Schaltungsanordnung,
- Fig. 3: eine mit einem Ringzähler und einem Speicher ausgerüstete Schaltungsanordnung zur dynamischen Ansteuerung des Steuerspannungseingangs des Reflexionslichttasters,
- Fig. 4: eine Schaltungsanordnung zur dynamischen Ansteuerung des Steuerspannungseingangs mittels eines Microcontrollers.
- Fig. 5: Einen Reflexionslichttaster mit zueinander geneigt verlaufenden Lichtzentren

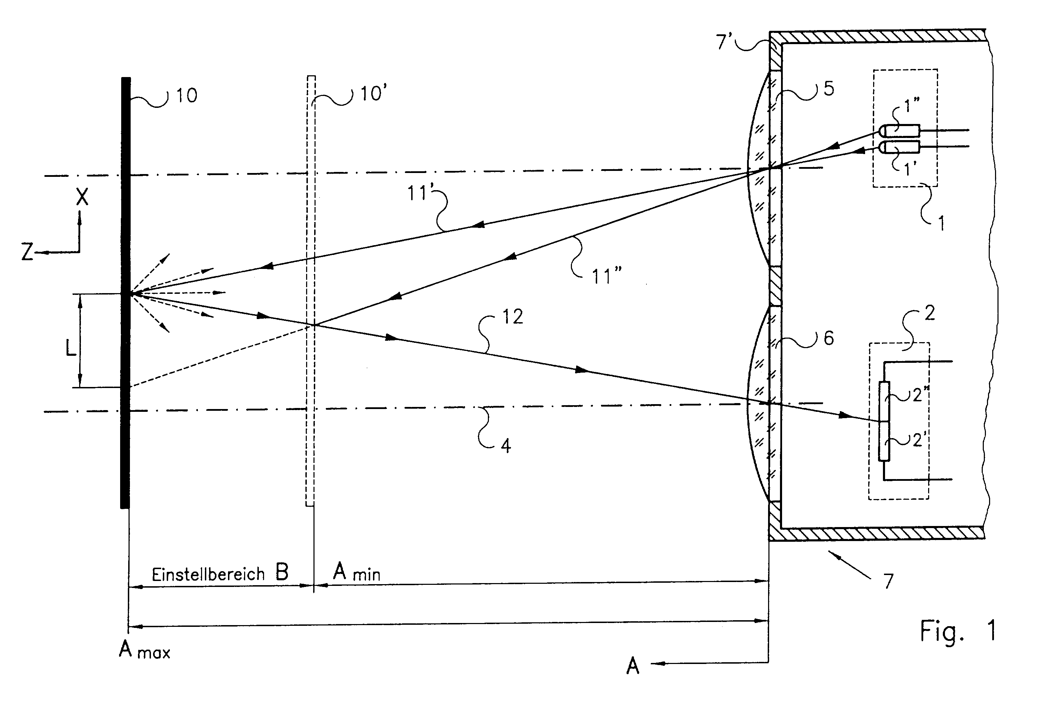

Von den in Figur 1 dargestellten beiden Lichtzentren 1' und 1'' der Lichtquelle 1 ist das eine Lichtzentrum 1' mit dem Zentralstrahl 11' für den Fernbereich (Ferndistanz) und das andere Lichtzentrum 1'' für den Nahbereich (Nahdistanz) vorgesehen. Dem Liehtzentrum 1' ist grundsätzlich das lichtempfindliche Element 2' für die Ferndistanz und dem Lichtzentrum 1'' grundsätzlich das lichtempfindliche Element 2'' für die Nahdistanz zugeordnet. Im Lichttastergehäuse 7 ist die gemeinsame Sendeoptik 5 und die Empfangsoptik 6 angeordnet, wobei die beiden Optiken unter- oder nebeneinander liegen können.

Das vom Lichtzentrum 1' ausgehende, durch den Zentrahlstrahl 11' veranschaulichte Sendestrahlenbündel wird vom in maximalem Abstand A von der Vorderfront des Gehäuses 7' des Lichttasters 7 (maximale Tastweite) befindlichen Objekt 10 diffus gestreut und mittels der Empfangsoptik 6 auf den lichtempfindlichen Elementen 2' und 2'' des Lichtempfängers 2 bzw. in deren Übergangsbereich abgebildet, wie dies der Empfangs-Zentralstrahl 12 veranschaulicht. Bei in maximaler Tastweite Aₘₐₓ befindlichem Objekt 10 wird nur das Lichtzentrum 1' angesteuert, bei minimaler Tastweite Aₘᵢₙ aufweisendem, gestrichelt angedeutetem Objekt 10' ist nur das Liehtzentrum 1'' aktiv. Bei maximaler Tastweite Aₘₐₓ entspricht der Abstand zwischen den beiden Zentralstrahlen 11' und 11" auf dem Tastobjekt 10 dem Längenmaß L. Der elektronisch variierbare Einstellbereich ist mit B bezeichnet.

Der Schaltausgang des Lichttasters 7 wird aktiviert, wenn bei aktivem Lichtzentrum 1' und inaktivem Lichtzentrum 1" die Summe der Photoströme des Nah-und Fernelements 2" und 2' kleiner gleich Null ist (I_{ges} ≦ 0). Dieser Fall tritt ein, wenn die Abbildung des Sendelichtflecks entweder ganz auf dem Nahelement 2" oder genau zwischen dem Nahelement 2'' und dem Fernelement 2' liegt. Damit sind Objekte 10 erfaßbar, die sich in einem Abstand A kleiner gleich Aₘₐₓ befinden (A ≤ Aₘₐₓ).

Bei inaktivem Lichtzentrum 1' und aktivem Lichtzentrum 1" wird der Schaltausgang ebenfalls aktiviert, wenn die Summe der Photoströme der beiden lichtempfindlichen Elemente 2' und 2" kleiner gleich Null wird. Das ist der Fall, wenn die Abbildung des Sendelichtflecks entweder zwischen dem Fernelement 2' und dem Nahelement 2" oder ganz auf dem Nahelement 2" liegt. Objekte 10' werden dann in einem Abstand A ≦ Aₘᵢₙ erfaßt.

Sind beide Lichtzentren 1' und 1" (Sendedioden) aktiv, so werden auf dem Objekt 10 (Tastobjekt) zwei Lichtflecke abgebildet, die einen bestimmten Abstand voneinander aufweisen. Ist dieser Abstand relativ groß, so kann auch die Tastweite in einem verhältnismäßig großen Bereich B (B = Aₘₐₓ - Aₘᵢₙ) variiert werden. Durch Wahl des Abstands der beiden Lichtflecke voneinander kann somit der jeweilige Einstellbereich festgelegt werden.

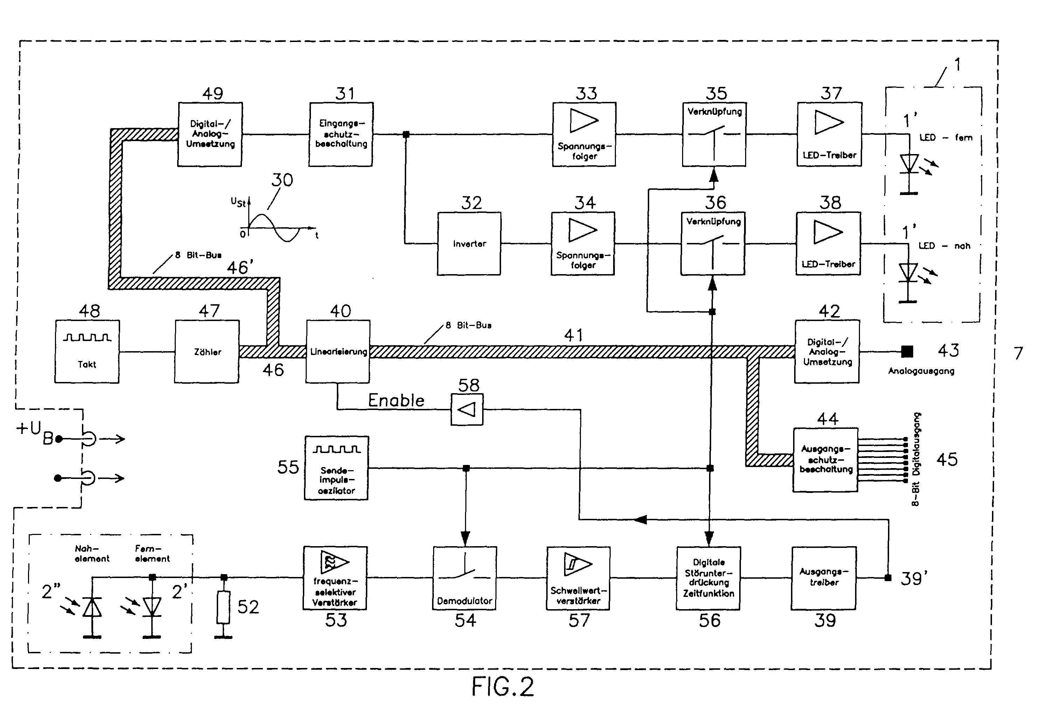

Wie aus dem Blockschaltbild gemäß Figur 2 ersichtlich ist, wird der Steuerspannungseingang 30 des Reflexionslichttasters 7 mit einer periodischen Sinusspannung U_{ST} dynamisch angesteuert. Die Steuerspannung kann dabei auch sägezahnförmig, dreieckförmig oder ähnlich sein. Durch eine Eingangsschutzbeschaltung 31 wird die nachfolgende Schaltung vor Überspannung, Störspitzen oder Verpolung geschützt.

Die Steuerspannung U_{ST} wird mittels eines Inverters 32 invertiert. Dadurch ist erreicht, daß das Lichtzentrum 1'' (Sendediode), das für die kurze Distanz vorgesehen ist, bei minimaler Eingangsspannung am Inverter 32 (Steuerspannung U_{ST}) den maximalen Sendestrom erhält, während das andere Lichtzentrum 1' (Sendediode) für die große Distanz in diesem Fall sendestromlos bleibt.

Im umgekehrten Fall erhält das Lichtzentrum 1' für die große Distanz bei maximaler Eingangsspannung U_{ST} den maximalen Sendestrom, wogegen das Lichtzentrum 1'' für die kurze Distanz sendestromlos bleibt.

Durch dieses "Überblenden" von einem Lichtzentrum zum anderen wird eine stufenlose Veränderung der Tastweite und eine Tastweitenprogrammierung ermöglicht.

Der Inverter 32 kann dabei als Operationsverstärker ausgebildet sein, der als Subtrahierer geschaltet ist, bei dem alle Widerstände gleich groß gewählt sind. Die Steuerspannung U_{ST} liegt am invertierenden Eingang des Operationsverstärkers. An den nicht invertierenden Eingang des Operationsverstärkers ist eine fest vorgegebene Spannung angelegt. Damit ist die Ausgangsspannung bezogen auf die Eingangsspannung genau invertiert.

Die beiden Treiberstufen 37 und 38 können somit wie vorgesehen angesteuert werden. Das heißt, bei minimaler Eingangsspannung U_{ST} = 0V ist die minimale Tastweite und bei maximaler Steuerspannung U_{ST}, zum Beispiel 5 V, die maximale Tastweite bzw. Reichweite eingestellt. Die maximale Frequenz der Steuerspannung ist kleiner gewählt als die maximale Schaltfrequenz des Reflexionslichttasters. Die Anordnung ist so getroffen, daß bei unbeschaltetem Steuerspannungseingang eine mittlere Tastweite vorprogrammiert ist.

Zur Vermeidung einer Belastung des die Steuerspannung bei offenem Steuerspannungseingang festlegenden Spannungsteilers der Schutzbeschaltung dienen die beiden Spannungsfolger 33 und 34. Die den Spannungsfolgen 33 und 34 nachgeschalteten Verknüpfungsglieder 35 und 36 dienen zur Verknüpfung des durch den Sendeimpulsgenerator 55 erzeugten Sendetakts mit der analogen Steuerspannung U_{ST} (UND-Verknüpfung).

Die LED-Treiberstufen 37 und 38 dienen zur Konstanthaltung des Sendestroms, um auch bei schwankender Betriebsspannung stets die gleiche Lichtleistungsabgabe der Lichtzentren 1' und 1" zu gewährleisten.

An die empfangsseitige Ausgangstreiberstufe 39 mit dem Schaltausgang 39' ist über einen Verstärker 58 erfindungsgemäß eine Linearisierungsanordnung 40 angeschlossen, an deren Ausgang über einen 8-Bit-Bus 41 sowohl ein Digital/-Analogwandler 42 mit Analogausgang 43 als auch eine Ausgangsschutzbeschaltung 44 (Puffer) mit 8-Bit-Digitalausgang 45 liegt.

Die Linearisierungsanordnung 40 ist eingangsseitig über einen 8-Bit-Bus 46 zur Erzeugung von Steuersignalen mit einem Ringzähler 47 elektrisch verbunden, dem ein Taktgeber 48 vorgeschaltet ist. Vom 8-Bit-Bus 46 führt ein weiterer 8-Bit-Bus 46' zu einem Digital/Analogwandler 49. Mit dem Taktgeber 48 wird der Ringzähler 47 angesteuert (Clocksignal), dessen Ausgangssignal über den D/A-Wandler 49 die Sinus- oder sägezahnförmige Steuerspannung U_{ST} generiert und die Adreßinformation für die Linearisierungsanordnung 40 erzeugt.

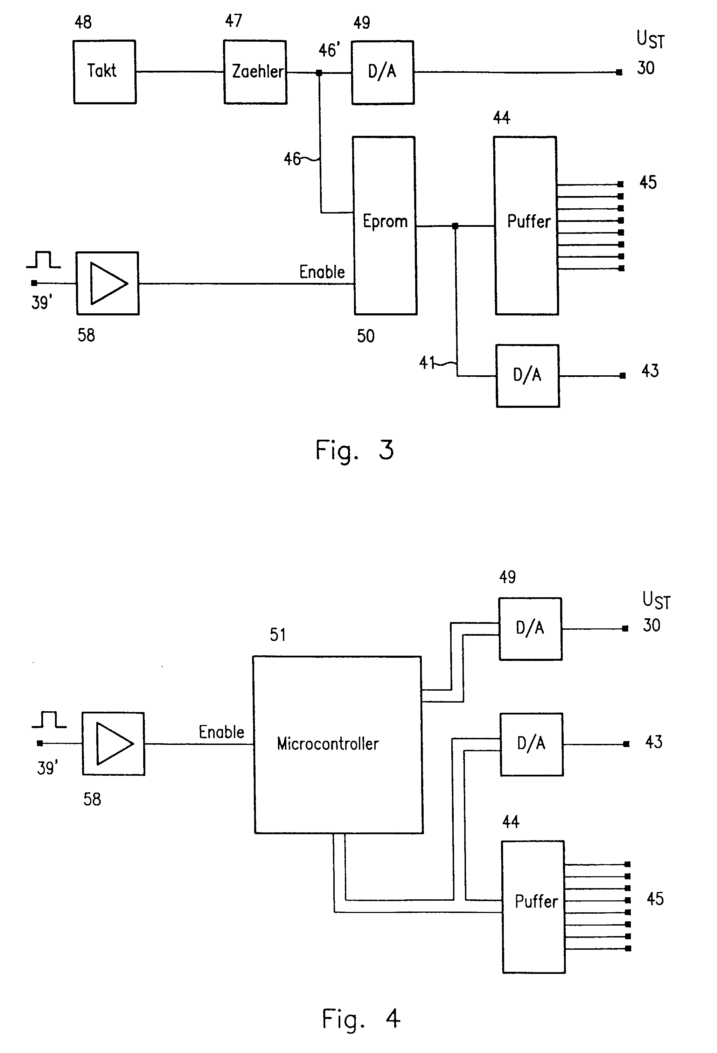

Die Linearisierungsanordnung 40 kann, wie Figur 3 zeigt, aus einem lösch- und programmierbaren Speicher 50 (EPROM) bestehen, in dem eine Linearisierungstabelle abgelegt ist. Der jeweilige Entfernungswert eines Tastobjekts 10 bzw. die jeweilige Abstandsinformation wird aus dem EPROM 50 ausgelesen, sobald der Schaltausgang 39' des Reflexionslichttasters aktiv wird. Die Informaion (Datenwert) steht nun direkt digital am Ausgang 45 und / oder analog am Ausgang 43 an.

Die Linearisierungsanordnung 40 kann auch, wie aus Figur 4 ersichtlich ist, durch einen Microcontroller 51 verwirklicht sein, der die Steuerspannung U_{ST} erzeugt, den Schaltausgang 39' des Reflexionslichttasters auswertet, die Linearisierung übernimmt und die Ausgabe der Abstandsinformation am Digital- und/oder Analogausgang 45 / 43 bewirkt.

Vom Microcontroller 51 wird durch ein entsprechendes Programm die Funktion eines Ringzählers übernommen. Ein Parallelport gibt den Zählerstand an den D/A-Wandler 49 weiter. Der Ausgang des D/A-Wandlers 49 ist mit dem Steuerspannungseingang 30 U_{ST} des Reflexionslichttasters verbunden. Wird ein Tastobjekt 10 erfaßt, setzt der Lichttaster den Schaltausgang 39'. In diesem Augenblick übernimmt der Microcontroller 51 den Zählerstand des Ringzählers. Über den Zählerstand sucht dann das Programm aus der im Microcontroller abgelegten Linearisierungstabelle den zugehörigen Abstandswert aus, der dem Anwender sowohl digital (Digitalausgang 45) als auch analog (Ausgang 43) zur Verfügung steht.

Den empfangsseitigen lichtempfindlichen Elementen 2'' (Nahelement) und 2' (Fernelement) mit Strom-Spannungskonversion durch den Arbeitswiderstand 52 ist ein frequenzselektiver Verstärker 53 nachgeschaltet (siehe Fig. 2), an dessen Ausgang ein Demodulator 54 angeschlossen ist, der vom Sendeimpulsoszillator 55 gesteuert ist, welcher die Impulsweite und die Wiederholfrequenz der gesteuerten Ströme der Lichtzentren 1' und 1" der Lichtquelle 1 über die UND-Verknüpfung 35, 36 und die LED-Treiber 37, 38 festlegt sowie die digitale Störunterdrückung 56 taktet, die am Ausgang eines eingangsseitig mit dem Demodulator 54 verbundenen Schwellwertverstärkers 57 liegt und dem Ausgangstreiber 39 vorgeschaltet ist.

Die Speisespannung des Lichttasters 7 ist in Fig. 2 mit U_{B} bezeichnet. Durch die dynamische Ansteuerung des Steuerspannungseingangs 30 über den Taktgeber 48 und den Ringzähler 47, der über den D / A Wandler 49 die Steuerspannung U_{ST} generiert, wird die Tastweite vom maximalen Wert Aₘₐₓ bis zum minimalen Wert Aₘᵢₙ, der inversen Steuerung der Ströme der Lichtzentren 1' und 1" (Überblendung) zyklisch durchfahren. Der maximalen Steuerspannung U_{ST max} (z. B. 5 V) entspricht dabei die maximale Tastweite Aₘₐₓ und der minimalen Steuerspannung U_{ST} = 0 die minimale Tastweite Aₘᵢₙ. Grundsätzlich kann der Einstellbereich B auch umgekehrt durchfahren werden, also minimale Tastweite - maximale Tastweite.
Sobald der Lichttaster ein Objekt erkennt, wird der Schaltausgang gesetzt und die Abstandsinformation aus dem Speicher ausgelesen.

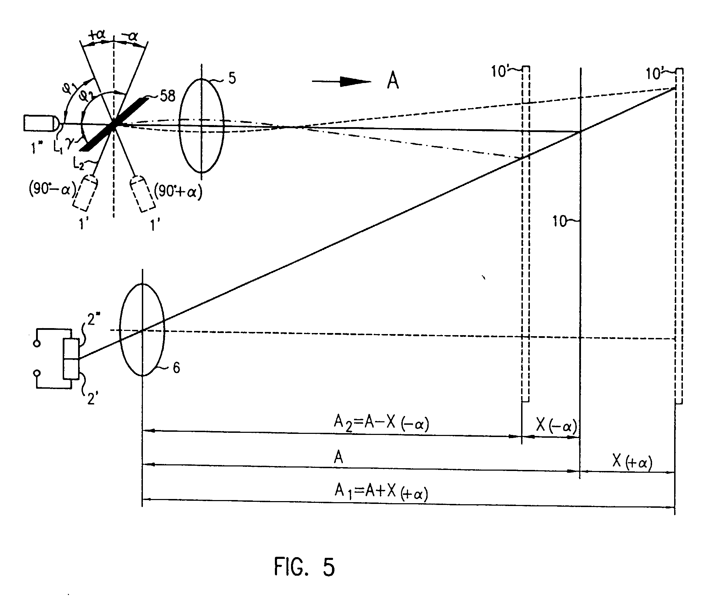

Nach einem weiteren Gedanken der Erfindung sind, wie Fig. 5 zeigt, die Längsachsen L₁, L₂ der zwei Lichtzentren 1' und 1" unter einem Winkel ϕ_{1,2} = (90° ± α) geneigt zueinander angeordnet, wobei die Längsachse L₁ des einen Lichtzentrums 1" parallel zur optischen Achse der Sendeoptik 5 verläuft. Im Schnittpunkt der beiden Längsachsen L₁ und L₂ der beiden Lichtzentren 1" und 1' ist unter einem geeigneten Winkel γ zur Längsachse L₁ des Lichtzentrums 1" bzw. zur optischen Achse der Sendeoptik 5 geneigt ein teildurchlässiger Spiegel 58 angeordnet.

Damit ergibt sich wegen spiegelnder Reflexion zwischen dem Sendelichtstrahl des Lichtzentrums 1" und demjenigen des Lichtzentrums 1' ein Winkel *α*, der ein Maß für den Abstand der beiden Lichtflecke und damit für den Einstellbereich der Tastweite darstellt. Durch Variation des Winkels α können somit unterschiedliche Tastweiten vorgegeben werden.

Bei positivem Winkel α ergibt sich für
die maximale Tastweite Aₘₐₓ = A + X_{(+α)}
Die minimale Tastweite ist in diesem Fall A.
Bei negativem Winkel α beträgt die maximale Tastweite A, die minimale Tastweite A - X_{(-α)}.
Die Anzahl der Sendedioden kann grundsätzlich beliebig erhöht werden.

## Patentansprüche

1. Reflexionslichttaster, bei dem Lichtsender und Lichtempfänger mit jeweils vorgeordneter Sende- und Empfangsfrontlinse benachbart zueinander angeordnet sind und der mit einer Einrichtung zum Einstellen des Grenzabstands eines Tastobjekts vom Tastergehäuse versehen ist, lichtempfangsseitig lichtempfindliche Elemente aufweist, deren Ausgangssignale einen Differenzverstärker beaufschlagen, dessen Ausgangssignal in einer Auswerteschaltung bezüglich Amplitude und Vorzeichen bewertet wird, wobei der Lichtsender wenigstens zwei voneinander unabhängige Lichtquellen enthält, der Lichtempfänger wenigstens zwei getrennt auswertbare lichtempfindliche Elemente aufweist und der jeweilige Grenzabstand innerhalb einer definierten Tastzone durch inverse Steuerung der Ströme der Lichtquellen mittels einer Steuerspannung stufenlos einstellbar ist, dadurch gekennzeichnet, daß die Tastzone (B) durch dynamische Ansteuerung der Lichtquellen (1', 1") mit einer periodischen Steuerspannung (U_{ST}) zyklisch vom maximalen Entfernungswert (Aₘₐₓ) bis zum minimalen Entfernungswert (Aₘᵢₙ) oder umgekehrt durchfahren wird, bei in der dadurch definierten Tastzone (B) vorhandenem und erkanntem Objekt (10, 10') der Schaltausgang (39') selbsttätig gesetzt und durch Verknüpfung des Schaltausgangs (39') mit der Steuerspannung (U_{ST}) über eine Linearisierungsanordnung (40) der jeweilige Entfernungswert des Objekts von der Frontseite (7') des Lichttastergehäuses digital und/oder über einen Digital-Analogwandler ausgegeben wird.

2. Reflexionslichttaster nach Anspruch 1, dadurch gekennzeichnet, daß die Linearisierungsanordnung als lösch- und programmierbarer Lesespeicher (50) mit einer in diesem gespeicherten Linearisierungstabelle ausgebildet ist und der Entfernungswert (Abstandsinformation) bei aktiviertem Schaltausgang (39') aus dem Speicher (50) auslesbar ist.

3. Reflexionslichttaster nach Anspruch 1 oder 2, dadurch gekennzeichnet, daß die periodische Steuerspannung (U_{ST}) durch einen taktgesteuerten Ringzähler (47) und über einen diesem nachgeschalteten Digital / Analogwandler (49) generiert wird.

4. Reflexionslichttaster nach Anspruch 3, dadurch gekennzeichnet, daß der Ringzähler (47) die Adressinformation für den Speicher (50) festlegt.

5. Reflexionslichttaster nach Anspruch 1, dadurch gekennzeichent, daß die Steuerspannung (U_{ST}) mittels eines Mikrocontrollers (51) erzeugt wird, der die Linearisierung der Entferungswerte übernimmt, den Schaltausgang (39') auswertet und den Entfernungswert analog oder digital ausgibt.

6. Reflexionslichttaster nach einem der vorhergehenden Ansprüche, dadurch gekennzeichnet, daß er mit zwei Lichtsendern (Sendedioden) versehen ist, wobei die Längsachse L₁ des einen Lichtsenders (1") parallel zur optischen Achse der Sendeoptik (5) verläuft und sich die Längsachse L₂ des anderen Lichtsenders (1') um einen Winkel ϕ = (90 ± α) hierzu geneigt erstreckt und daß im Schnittpunkt der beiden Längsachsen der Lichtsender (1", 1') unter einem geeigneten Winkel γ zur optischen Achse der Sendeoptik (5) geneigt ein teildurchlässiger Spiegel (58) angeordnet ist.

7. Reflexionslichttaster nach einem der vorhergehenden Ansprüche, dadurch gekennzeichnet, daß die maximale Frequenz der Steuerspannung U_{ST} kleiner gewählt ist als die maximale Schaltfrequenz des Reflexionslichttasters.

8. Reflexionslichttaster nach einem der vorhergehenden Ansprüche, dadurch gekennzeichnet, daß bei unbeschaltetem Steuerspannungseingang (30) eine mittlere Tastdistanz vorprogrammiert ist.

## Claims

1. Reflected light sensor, in which light emitter and light receiver respectively with emitter front lens and receiver front lens arranged upstream thereof are arranged adjacent to one another and which is provided with a device for the setting of the boundary spacing of an object to be detected from the sensor housing, and has at the light-receiving side light-sensitive elements, the output signals of which act on a differential amplifier, the output signal of which is evaluated with respect to amplitude and sign in an evaluating circuit, wherein the light emitter contains at least two mutually independent light sources, the light receiver comprises at least two separately evaluatable light-sensitive elements and the respective boundary spacing is steplessly settable within a defined detection zone by inverse controlling of the currents of the light sources by means of a control voltage, characterised thereby that the detection zone (B) is cyclically traversed from the maximum distance value (Aₘₐₓ) to the minimum distance value (Aₘᵢₙ) or conversely by dynamic selective driving of the light sources (1', 1") with a periodic control voltage (U_{ST}), and in the case of an object (10, 10') present and recognised in the thereby defined detection zone the switching output (39') is automatically set and the respective distance value of the object from the front side (7') of the light sensor housing is issued digitally and/or by way of a digital-to-analog converter through linking of the switch output (39') with the control voltage (U_{ST}) by way of a linearising arrangement (40).

2. Reflected light sensor according to claim 1, characterised thereby that the linearising arrangement is constructed as an erasable and programmable read memory (50) with a linearising table stored therein and the distance value (spacing information) can be read out of the memory (50) in the case of activated switch output (39').

3. Reflected light sensor according to claim 1 or 2, characterised thereby that the periodic control voltage (U_{ST}) is generated by a cyclically controlled ring counter (47) and by way of an analog-to-digital converter (49) connected to this downstream thereof.

4. Reflected light sensor according to claim 3, characterised thereby that the ring counter (47) determines the address information for the memory (50).

5. Reflected light sensor according to claim 1, characterised thereby that the control voltage (U_{ST}) is produced by means of a microcontroller (51), which takes over the linearising of the distance value, evaluates the switch output (39') and issues the distance value in analog or digital form.

6. Reflected light sensor according to one of the preceding claims, characterised thereby that it is provided with two light emitters (emitter diodes), wherein the longitudinal axis L₁ of the one light emitter (1'') extends parallelly to the optical axis of the emitter optical system (5) and the longitudinal axis L₂ of the other light emitter (1') extends at an inclination thereto by an angle ϕ = (90 ± ) and that a partly permeable mirror (58) is arranged with an inclined angle γ relative to the optical axis of the emitter system (5) at the point of intersection of the two longitudinal axes of the light emitters (1", 1').

7. Reflected light sensor according to one of the preceding claims, characterised thereby that the maximum frequency of the control voltage U_{ST} is selected to be smaller than the maximum switching frequency of the reflected light sensor.

8. Reflected light sensor according to one of the preceding claims, characterised thereby, that a mean detecting distance is pre-programmed in the case of a non-wired control voltage input (30).

## Revendications

1. Détecteur photosensible à réflexion, dans lequel l'émetteur de lumière et le récepteur de lumière, respectivement précédés d'une lentille frontale d'émission et d'une lentille frontale de réception, sont disposés au voisinage l'un de l'autre, et qui est pourvu d'un dispositif pour régler la distance limite entre un objet à détecter et le boîtier du détecteur, et présente du côté d'émission de lumière des éléments photosensibles dont les signaux de sortie sollicitent un amplificateur différenciateur dont le signal de sortie est, dans un montage évaluateur, évalué quant à son amplitude et son signe, l'émetteur de lumière contenant aux moins deux sources lumineuses indépendantes entre elles, le récepteur de lumière présentant au moins deux éléments photosensibles séparément évaluables et la distance limite respective pouvant être réglée en continu à l'intérieur d'une zone définie de détection par commande inverse des intensités électriques des sources lumineuses au moyen d'une tension de commande, **caractérisé** en ce que la zone de détection (B) est cycliquement balayée, depuis la valeur maximale d'éloignement (Aₘₐₓ) jusqu'à la valeur minimale d'éloignement (Aₘᵢₙ) ou vice-versa, par asservissement dynamique des sources lumineuses (1', 1") avec une tension de commande périodique (U_{ST}), la sortie de commutation (39') est automatiquement activée en cas de présence et de reconnaissance d'un objet (10, 10') dans la zone de détection (B) ainsi définie et, par liaison logique de la sortie de commutation (39') avec la tension de commande (U_{ST}) par l'intermédiaire d'un dispositif de linéarisation (40), la valeur respective d'éloignement de l'objet de la face frontale (7') du boîtier du détecteur photosensible est délivrée numériquement et/ou par l'intermédiaire d'un convertisseur numérique-analogique.

2. Détecteur photosensible à réflexion selon la revendication 1, **caractérisé** en ce que le dispositif de linéarisation est réalisé sous forme de mémoire morte programmable et effaçable (50) avec une table de linéarisation déposée dans cette mémoire, et la valeur d'éloignement (information de distance) peut, lorsque la sortie de commutation (39') est activée, être extraite de la mémoire (50).

3. Détecteur photosensible à réflexion selon la revendication 1 ou 2, **caractérisé** en ce que la tension de commande périodique (U_{ST}) est générée par un compteur annulaire cadencé (47) et par l'intermédiaire d'un convertisseur numérique-analogique (49) placé en aval de ce compteur.

4. Détecteur photosensible à réflexion selon la revendication 3, **caractérisé** en ce que le compteur annulaire (47) détermine l'information d'adresse pour la mémoire (50).

5. Détecteur photosensible à réflexion selon la revendication 1, **caractérisé** en ce que la tension de commande (U_{ST}) est produite au moyen d'un microprocesseur (51), qui assure la linéarisation des valeurs d'éloignement, évalue la sortie de commutation (39') et délivre la valeur d'éloignement sous une forme analogique ou numérique.

6. Détecteur photosensible à réflexion selon une des revendications précédentes, **caractérisé** en ce qu'il est pourvu de deux émetteurs de lumière (diodes émettrices), l'axe longitudinal L₁ d'un premier émetteur de lumière (1") s'étendant parallèlement à l'axe optique de l'optique d'émission (5) et l'axe longitudinal L₂ de l'autre émetteur de lumière (1') s'étendant sous une inclinaison d'un angle ϕ = (90 ± α) par rapport audit axe optique, et en ce qu'un réflecteur partiellement translucide (58) est disposé au point d'intersection des deux axes longitudinaux des émetteurs de lumière (1", 1') en étant incliné sous un angle approprié y par rapport à l'axe optique de l'optique d'émission (5).

7. Détecteur photosensible à réflexion selon une des revendications précédentes, **caractérisé** en ce que la fréquence maximale de la tension de commande (U_{ST}) est choisie inférieure à la fréquence maximale de commutation du détecteur photosensible à réflexion.

8. Détecteur photosensible à réflexion selon une des revendications précédentes, **caractérisé** en ce qu'une distance moyenne de détection est préprogrammée pour le cas où l'entrée de tension de commande (30) n'est pas connectée.
